## Europäisches Patentamt
## European Patent Office
## Office européen des brevets

(11) Veröffentlichungsnummer: **0 122 473**
**B1**

(12) # EUROPÄISCHE PATENTSCHRIFT

(45) Veröffentlichungstag der Patentschrift:
24.09.86

(51) Int. Cl.⁴: **H 02 J 7/04**, H 02 J 7/10 //
H02J9/02

(21) Anmeldenummer: 84102839.2

(22) Anmeldetag: 15.03.84

(54) **Verfahren zur Überwachung der Ladung von Batterien.**

(30) Priorität: 17.03.83 DE 3309543

(43) Veröffentlichungstag der Anmeldung:
24.10.84 Patentblatt 84/43

(45) Bekanntmachung des Hinweises auf die Patenterteilung:
24.09.86 Patentblatt 86/39

(84) Benannte Vertragsstaaten:
AT DE FR GB NL

(56) Entgegenhaltungen:
DE-A-2 051 366
US-A-3 602 794
US-A-3 963 976
US-A-4 209 736

(73) Patentinhaber: CEAG Licht- und
Stromversorgungstechnik GmbH,
Frenkingstrasse 14, D-4630 Bochum 7 (DE)

(72) Erfinder: Jütte, Reinhold, Barbarastrasse 32, D-3538
Marsberg 9 (DE)
Erfinder: Klaas, Wilfried, Jägerstrasse 12, D-4773
Möhnesee 13 (DE)

(74) Vertreter: Kempe, Wolfgang, Dr., c/o CEAG Licht-
und Stromversorgungstechnik GmbH Postfach
3 51, D-6800 Mannheim 1 (DE)

EP 0 122 473 B1

## Beschreibung

Die Erfindung bezieht sich auf ein Verfahren zur Überwachung der Ladung von Batterien gemäß dem Oberbegriff des Anspruchs 1 sowie auf eine Einrichtung zur Durchführung des Verfahrens. Das Verfahren bzw. die Einrichtung kann z.B. bei der Ladung von wartungsarmen bzw. wartungsfreien Bleibatterien für Notbeleuchtungen angewendet werden. Die Erfindung wird am Beispiel der wartungsarmen bzw. wartungsfreien Bleibatterie beschrieben, ist jedoch auch für andere Batterietypen anwendbar, soweit sie eine ähnliche Ladecharakteristik aufweisen.

Verfahren und Einrichtungen zur Überwachung der Ladung von Batterien dienen zur Kontrolle der Batterie und des Ladegerätes während des Ladevorganges. Meßergebnisse oder Ausgangssignale von Überwachungseinrichtungen können z.B. zur Steuerung von Ladeeinrichtungen, zur Beurteilung des Batteriezustandes oder für Warnmeldungen verwendet werden.

Zur Überwachung der Ladung wird üblicherweise die Spannung und der Ladestrom gemessen. Die Ladung erfolgt meistens nach dem bekannten Konstantspannungsverfahren. Erschwerend für die Überwachung ist dabei die Eigenschaft von Batterien, insbesondere von wartungsarmen bzw. wartungsfreien Bleibatterien, daß der Ladestrom am Ende der Ladung sehr kleine Werte annimmt. Der Ladestrom kann sogar nahezu den Wert Null annehmen, so daß nicht ohne weiteres festgestellt werden kann, ob eine Verbindung zwischen Batterie und Ladegerät besteht. Beispielsweise kann der Ladestrom einer 6-Ah-Batterie von 1 A bei Ladebeginn auf weniger als 200µ A bei Ende der Ladung zurückgehen.

Um den kleinen Restladestrom zu messen, kann man in die Batterieleitungen einen Shunt schalten und die daran abfallende kleine Spannung mit Hilfe von hochgenauen elektronischen Schaltungen (z.B. Operationsverstärker, Komparatoren) verarbeiten. Diese Lösung ist jedoch sehr aufwendig. Bekannt ist auch ein Verfahren, bei dem ein Prüfstrom aus einer Prüfstromquelle eingespeist wird. Die Prüfstromquelle muß dabei auf den jeweiligen Batterietyp abgestimmt sein und der Prüfstrom muß kleiner sein als der zu erwartende kleinste Reststrom. In Grenzfällen, z.B. bei niedrigen Temperaturen und gleichzeitigen Streuungen der Batteriedaten, ist dieses Verfahren nur sehr bedingt einsetzbar.

In der DE-A 20 51 366 wird ein Verfahren zur Überwachung des Ladezustandes einer Batterie beschrieben, wobei während der Zeit, in der die Batterie bereits geladen und vom Ladegerät getrennt ist, in bestimmten Zeitabständen für eine kurze Dauer eine Verbindung zum Ladegerät hergestellt und eine stabilisierte Spannung zur Nachladung angelegt wird und der dabei fließende Ladestrom gemessen wird. Das Verfahren ermöglicht es eine dauernde Ladung zur Ladungserhaltung zu vermeiden. Ein längerer Ladevorgang mit dieser stabilisierten Spannung wird nur dann eingeleitet, wenn sich während der kurzfristigen Ladung während des Lade- und Prüfvorganges ein Ladestrom einstellt, der über einem vorgegebenen Schwellwert liegt. Das oben dargelegte Problem, daß die Messung kleiner Ladeströme aufwendig ist, ist in der genannten Druckschrift nicht angesprochen.

Schließlich ist in der US-A 39 63 976 ein Verfahren zur Batterieladung - nicht zur Überwachung des Ladezustandes - angegeben, bei dem abwechselnd Stromimpulse niedriger und hoher Stromstärke vorgesehen sind. Die Stromimpulse hoher Stromstärke sollen eine kräftige Durchmischung der Elektrolyt-Flüssigkeit und damit eine Erhöhung der nutzbaren Batteriekapazität bewirken. Dabei entsteht eine starke Gasung. Bei wartungsarmen oder wartungsfreien Bleibatterien würde diese Maßnahme zu einer raschen Zerstörung führen.

Ausgehend von der DE-A 20 51 366 liegt der vorliegenden Erfindung die Aufgabe zugrunde, ein Verfahren und eine Einrichtung anzugeben, die eine zuverlässige Überwachung des Ladezustandes der Batterie und des Batterieladevorganges auch bei Einsatz wenig empfindlicher Meßeinrichtungen sicherstellen.

Diese Aufgabe wird durch ein Verfahren gemäß des kennzeichnenden Teils des Anspruchs 1 gelöst. Ausgestaltungen und eine Einrichtung zur Durchführung des Verfahrens sind in den abhängigen Ansprüchen angegeben. Vorteile des erfindungsgemäßen Verfahrens bestehen darin, daß durch die kurzzeitige erhöhte Spannung ein mit einfachen Mitteln deutlich meßbarer Strom fließt. Streuungen in den Batteriedaten und unterschiedliche Batterietemperaturen beeinträchtigen die Überwachung nicht. Bleibt trotz erhöhter Spannung ein Stromfluß aus, so ist dies ein deutlicher Hinweis auf entweder ein defektes Ladegerät bzw. eine unterbrochene Ladeleitung oder aber auf einen hohen Kapazitätsverlust der Batterie.

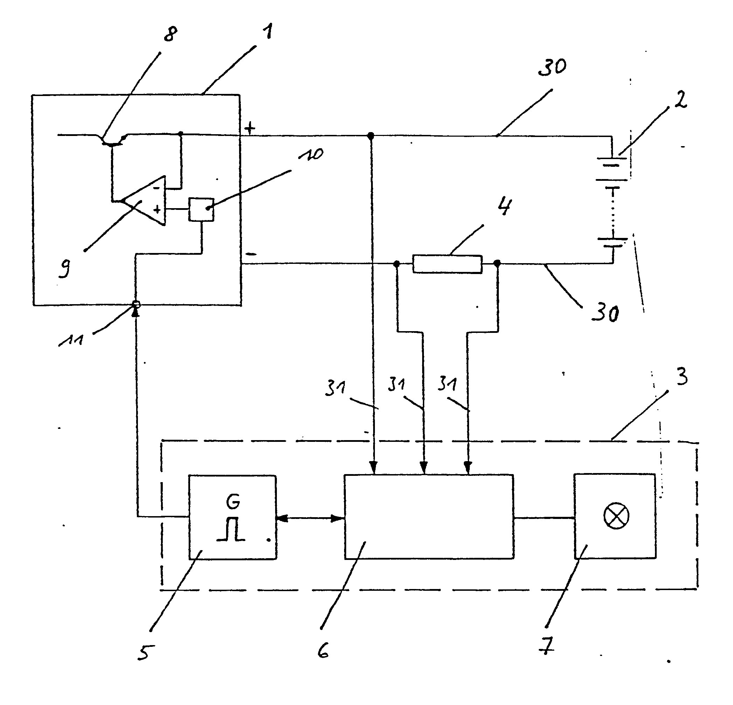

Die Erfindung wird anhand eines Ausführungsbeispiels und der Zeichnung erläutert.

In der Zeichnung ist ein Blockschema zu einem Ladegerät 1 mit angeschlossener Batterie 2 und einer Überwachungseinrichtung 3 dargestellt. In eine der Anschlußleitungen 30 ist ein Shunt 4 zur Strommessung eingeschaltet.

Die Überwachungseinrichtung 3 enthält einen Pulsgenerator 5, eine Auswerteeinrichtung 6 und eine Störungsanzeige 7. Das Ladegerät 1 enthält einen oder mehrere steuerbare Leistungshalbleiter 8, die von einer Spannungsvergleichsschaltung 9 und anderen nicht dargestellten Steuereinrichtungen angesteuert werden. Am Eingang der Spannungsvergleichsschaltung 9 liegt die Ausgangsspannung des Ladegerätes 1 und eine Referenzspannung aus einer steuerbaren Referenzspannungsquelle 10, die mit einem Steuereingang 11 des Ladegeräts 1 verbunden ist. Der Pulsgenerator 5 ist sowohl mit dem Steuereingang 11 als auch mit der Auswerteeinrichtung 6 verbunden. Die Störungsanzeige 7 ist an der Auswerteeinrichtung 6 angeschlossen. An die Auswerteeinrichtung 6 sind drei Meßleitungen 31 zur Erfassung der Batteriespannung und des Spannungsabfalls am Shunt 4 angeschlossen.

Die Ladung der Batterie 2 erfolgt durch das Ladegerät 1 in der üblichen Weise aufgrund einer auf die Batterie 2 abgestimmten Ladekennlinie. Diese übliche Steuerung der Ladespannung wird überlagert durch Steuersignale vom Pulsgenerator 5, die über den Steuereingang 11 auf die Referenzspannungsquelle 10 gegeben werden und die Referenzspannung verändern. Dabei wird die Referenzspannungsquelle 10 in relativ großen Zeitabständen, z.B. alle 10 sec für eine kurze Prüfzeit, z.B. 10 ms Dauer, vom Steuersignal des Pulsgenerators 5 verstellt. Zur Schonung der Batterie 2 sollen die Zeitabstände ausreichend hoch und die Prüfzeit möglichst kurz gewählt werden. Außerdem soll die damit kurzzeitig erhöhte Ausgangsspannung am Ladegerät 1 auf einen zulässigen Wert, z.B. 2,5V/Zelle einer Bleibatterie, begrenzt werden.

Die Auswerteeinrichtung 6 erfaßt die Batteriespannung, die Spannung am Shunt 4 und den Impuls des Pulsgenerators 5. Die am Shunt 4 gemessene Spannung wird mit einer vorgegebenen Referenzspannung verglichen. Wenn während der Dauer des vom Pulsgenerator abgegebenen Impulses die am Shunt 4 gemessene Spannung nicht die Höhe der Referenzspannung erreicht, erfolgt eine Störungsmeldung mit Hilfe der Störungsanzeige 7.

Die Auswerteeinrichtung 6 kann durch Messung der Batteriespannung und des Spannungsabfalls am Shunt 4 auch feststellen, wann die Endphase des Ladevorganges erreicht ist und z.B. erst in dieser Endphase den Pulsgenerator einschalten.

Die Funktionen der Überwachungseinrichtung 3, also die Impulserzeugung, die Auswertefunktionen und die Ansteuerung der Störungsanzeige 7 können vorteilhaft mit Hilfe eines Mikroprozessors realisiert werden.

**Patentansprüche**

1. Verfahren zur Überwachung der Ladung von Batterien, insbesondere wartungsarmen bzw. wartungsfreien Batterien, wobei in bestimmten Zeitabständen für eine kurze Meßdauer eine definierte Ladespannung angelegt und der Ladestrom gemessen werden, dadurch gekennzeichnet, daß während der Ladung andauernd eine Ladespannung angelegt wird und daß als definierte Ladespannung während der kurzen Meßdauer - insbesondere am Ende der Ladung - eine deutlich erhöhte Ladespannung angelegt wird, so daß ein meßtechnisch gut erfaßbarer Ladestrom fließt.

2. Einrichtung zur Durchführung des Verfahrens nach Anspruch 1, bei der ein Ladegerät mit einer Batterie über einen Shunt verbunden ist, dadurch gekennzeichnet, daß eine Überwachungseinrichtung (3) vorgesehen ist, die einen Pulsgenerator (5), eine Auswerteeinrichtung (6) und eine Störungsanzeige (7) enthält, wobei an die Überwachungseinrichtung (3) Meßleitungen (31) zur Erfassung der Spannung an der Batterie (2) und am Shunt (4) angeschlossen sind und Spannungsimpulse des Pulsgenerators (5) über einen Steuereingang (11) des Ladegeräts (1) zu einer Referenzspannungsquelle (10) geführt sind, die über eine Spannungsvergleichsschaltung (9), die außerdem mit dem Ausgang des Ladegeräts (1) verbunden ist, die Ladespannung verändert.

3. Einrichtung nach Anspruch 2, dadurch gekennzeichnet, daß die Funktionen des Pulsgenerators (5) der Auswerteeinrichtung (6) und eine Ansteuerung der Störungsanzeige (7) in einem Mikroprozessor zusammengefaßt sind.

**Claims**

1. Method for monitoring the charging of batteries, particularly of low-maintenance or no-maintenance batteries, in which a specific charging voltage is applied at particular time intervals for a brief duration of measurement and the charging current is measured, characterized in that a charging voltage is continuously applied during the charging and that a distinctly increased charging voltage is applied as the specific charging voltage during the brief interval of measurement, particularly at the end of the charging, so that a charging current flows which can be easily detected by measurement.

2. Device for carrying out the method according to Claim 1, in which device a charging device is connected via a shunt to a battery, characterized in that a monitoring device (3) is provided which contains a pulse generator (5), an evaluating device (6) and a fault indicator (7), in which arrangement measuring lines (31) for detecting the voltage at the battery (2) and at the shunt (4) are connected to the monitoring device (3) and voltage pulses of the pulse generator (5) are passed via a control input (11) of the charging device (1) to a reference voltage source (10), which changes the charging voltage via a voltage comparing circuit (9) which is also connected to the output of the charging device (1).

3. Device according to Claim 2, characterized in that the functions of the pulse generator (5) of the evaluating device (6) and a drive circuit for the fault indicator (7) are combined in one microprocessor.

**Revendications**

1. Procédé de surveillance de la charge de batterie en particulier de batteries ne nécessitant que peu ou pas d'entretien, dans lequel, à des intervalles de temps déterminés, on applique pendant une courte durée de mesure une tension de charge définie et on mesure le courant de charge, caractérisé par le fait que, pendant la charge, on applique en permanence une tension de charge et que, comme tension de charge définie pendant la courte durée de mesure - en particulier à la fin de la charge - on applique une tension de charge nettement accrue de manière qu'il s'écoule un courant de charge facilement détectable par des techniques de mesure.

2. Dispositif pour la mise en oeuvre du procédé selon la revendication 1, dans lequel un chargeur est connecte à une batterie par l'intermédiaire d'une dérivation, caractérisé par le fait qu'il est prévu un dispositif de surveillance (3) qui comporte un générateur d'impulsions (5), un dispositif d'interprétation (6) et un affichage de dérangement (7), et dans lequel, au dispositif de surveillance (3) sont raccordées des lignes de mesure (31) pour la détection de la tension au niveau de la batterie (2) et de la dérivation (4), et des impulsions de tension du generateur d'impulsions (5) sont délivrées par l'intermédiaire d'une entrée de commande (11) du chargeur (1) à une source de tension de référence (10) qui modifie la tension de charge par l'intermédiaire d'un circuit comparateur de tension (9) qui est, en outre, raccordé à la sortie du chargeur (1).

3. Dispositif selon la revendication 2, caractérisé par le fait que les fonctions du générateur d'impulsions (5), du dispositif d'interprétation (6) et une commande de l'affichage de dérangement (7) sont réunies dans un microprocesseur.